Europäisches Patentamt

European Patent Office

Office européen des brevets

(11) Veröffentlichungsnummer: **0 173 908**
**A2**

# (12) EUROPÄISCHE PATENTANMELDUNG

(21) Anmeldenummer: 85110369.7

(22) Anmeldetag: 19.08.85

(51) Int. Cl.⁴: **B 01 D 53/14**

(30) Priorität: 01.09.84 DE 3432213

(43) Veröffentlichungstag der Anmeldung:
12.03.86 Patentblatt 86/11

(84) Benannte Vertragsstaaten:
AT BE DE FR GB IT NL SE

(71) Anmelder: BASF Aktiengesellschaft
Carl-Bosch-Strasse 38
D-6700 Ludwigshafen(DE)

(72) Erfinder: Volkamer, Klaus, Dr.
Heidelberger Ring 21
D-6710 Frankenthal(DE)

(72) Erfinder: Hefner, Werner, Dr.
In der Teichgewann 20
D-6840 Lampertheim(DE)

(72) Erfinder: Wagner, Eckhart, Dr.
Birkenstrasse 21 a
D-6701 Maxdorf(DE)

(72) Erfinder: Wagner, Ulrich, Dr.
Knospstrasse 7
D-6703 Limburgerhof(DE)

(54) Verfahren zum Entfernen von CO2 und/oder H2S aus Gasen.

(57) Die vorliegende Erfindung betrifft ein Verfahren zum Entfernen von $CO_2$ und/oder $H_2S$ aus $CO_2$ und/oder $H_2S$ enthaltenden Gasen, bei dem man das $CO_2$ und/oder $H_2S$ enthaltende Gas in zwei hintereinandergeschalteten Absorptionsstufen mit einer 3 bis 60 Gew.% eines tertiären Alkanolamins und 1 bis 50 Gew.% eines primären Alkanolamins enthaltenden wäßrigen Absorptionsflüssigkeit behandelt, die am Sumpf der ersten Absorptionsstufe erhatlene, mit $CO_2$ und/oder $H_2S$ beladene wäßrige Absorptionsflüssigkeit zur Regenerierung in mindestens zwei Entspannungsstufen entspannt, einen am Sumpf der letzten Entspannungsstufe erhaltenen Strom der Absorptionsflüssigkeit in die erste Absorptionsstufe zurückführt, einen weiteren am Sumpf der letzten und/oder vorletzen Entspannungsstufe erhaltenen Strom der Absorptionsflüssigkeit zur weiteren Regenerierung einer Abstreifzone zuführt und die am Sumpf der Abstreifzone erhaltene regenerierte Absorptionsflüssigkeit in die zweite Absorptionsstufe zurückführt.

EP 0 173 908 A2

Verfahren zum Entfernen von $CO_2$ und/oder $H_2S$ aus Gasen

Die vorliegende Erfindung betrifft ein Verfahren zum Entfernen von $CO_2$ und/oder $H_2S$ aus Gasen mittels einer wäßrigen Absorptionsflüssigkeit.

Es ist bekannt, z.B. aus A. Kohl und F. Riesenfeld, Gas Purification, 3. Auflage, 1979, insbesondere Seiten 28, 33 und 34, wäßrige Lösungen von primären Aminen wie Monoethanolamin zur Entfernung von $CO_2$ und/oder $H_2S$ aus Gasen zu verwenden. Ein Nachteil der Verwendung von wäßrigen Lösungen von Monoethanolamin besteht jedoch darin, daß die wäßrigen Monoethanolamin-Lösungen, besonders bei höheren Konzentrationen, stark korrosiv wirken. Um Korrosionsschäden in den Gaswaschanlagen zu vermeiden oder zumindest auf ein erträgliches Maß zu mindern, ist es daher erforderlich, in solchen Anlagen in aufwendiger Weise Systeme von Korrosionsinhibitoren einzusetzen, wobei jedoch diese Korrosionsinhibitoren bei $H_2S$-haltigen Gasen gar nicht eingesetzt werden können. Die bekannten Verfahren zur Entfernung von $CO_2$ und/oder $H_2S$ unter Verwendung von primären Alkanolaminen wie Monoethanolamin sind daher nicht zufriedenstellend.

Es bestand daher Bedarf nach einem Verfahren zum Entfernen von $CO_2$ und/oder $H_2S$ aus Gasen, bei dem die Nachteile der bekannten Verfahren vermieden werden können.

Es wurde nun ein vorteilhaftes Verfahren gefunden zum Entfernen von $CO_2$ und/oder $H_2S$ aus $CO_2$ und/oder $H_2S$ enthaltenden Gasen mittels einer wäßrigen, ein Alkanolamin enthaltenden Absorptionsflüssigkeit, welches dadurch gekennzeichnet ist, daß man das $CO_2$ und/oder $H_2S$ enthaltende Gas in einer ersten Absorptionsstufe mit einer 3 bis 60 Gew.% eines tertiären Alkanolamins und 1 bis 50 Gew.% eines primären Alkanolamins enthaltenden wäßrigen Absorptionsflüssigkeit behandelt, das am Kopf der ersten Absorptionsstufe erhaltene Gas einer zweiten Absorptionsstufe zuführt, in der es zur weiteren Entfernung von $CO_2$ und/oder $H_2S$ mit einer 3 bis 60 Gew.% eines tertiären Alkanolamins und 1 bis 50 Gew.% eines primären Alkanolamins enthaltenden wäßrigen Absorptionsflüssigkeit behandelt wird, die einen geringeren Gehalt an $CO_2$ und/oder $H_2S$ aufweist als die der ersten Absorptionsstufe zugeführte Absorptionsflüssigkeit, am Kopf der zweiten Absorptionsstufe das behandelte Gas abzieht, die am Boden der zweiten Absorptionsstufe erhaltene mit $CO_2$ und/oder $H_2S$ vorbeladene wäßrige Absorptionsflüssigkeit am Kopf der ersten Absorptionsstufe zuführt, die im unteren Teil der ersten Absorptionsstufe erhaltene, mit $CO_2$ und/oder $H_2S$ beladene wäßrige Absorptionsflüssigkeit zur Regenerierung in mindestens zwei Entspannungsstufen entspannt, einen am Sumpf der letzten Entspannungsstufe erhal-
Ste/P

0173908

tenen Strom der Absorptionsflüssigkeit in die erste Absorptionsstufe zurückführt, einen weiteren am Sumpf der letzten und/oder vorletzten Entspannungsstufe erhaltenen Strom der Absorptionsflüssigkeit zur weiteren Regenerierung einer Abstreifzone zuführt und die am Sumpf der Abstreifzone erhaltene regenerierte Absorptionsflüssigkeit in die zweite Absorptionsstufe zurückführt.

In einer vorteilhaften Ausführungsform des Verfahrens wird die letzte Entspannungsstufe bei vermindertem Druck gegenüber Atmosphärendruck betrieben.

In einer anderen vorteilhaften Ausführungsform des Verfahrens führt man zum Ausgleich der Wasserverluste durch in den am Kopf der zweiten Absorptionsstufe und bzw. oder aus den Entspannungsstufen und bzw. oder aus der Abstreifzone abgezogenen Gasströmen enthaltenes Wasser am Sumpf der vorletzten Entspannungsstufe eine dem Wasserverlust entsprechende Menge Wasserdampf zu.

In einer weiteren bevorzugten Ausführungsform des Verfahrens wird der verminderte Druck in der letzten Entspannungsstufe mittels eines Wasserdampfstrahlers erzeugt. Dabei kann es vorteilhaft sein, daß man das am Kopf der letzten Entspannungsstufe abgezogene Gas zusammen mit dem Wasserdampf, mit dem der Wasserdampfstrahler betrieben wird, am Sumpf der vorletzten Entspannungsstufe zuführt.

Bei dem neuen Verfahren können relativ hohe Alkanolaminkonzentrationen in der Absorptionsflüssigkeit verwendet werden, wobei das Auftreten von Korrosionsschäden weitgehend vermieden werden kann, ohne daß ein Zusatz von Korrosionsinhibitoren erforderlich wird.

Beim Betreiben der letzten Entspannungsstufe bei vermindertem Druck wird eine regenerierte Absorptionsflüssigkeit mit einem geringerem $CO_2$- und/ oder $H_2S$-Gehalt erhalten, so daß es möglich ist, geringere Mengen an Absorptionsflüssigkeit im Kreis zu führen. Hierdurch ergeben sich entsprechende Einsparungen bei den Energieverbräuchen für die Förderung der Absorptionsflüssigkeit. Gleichzeitig kann durch diese Arbeitsweise der apparative Aufwand vermindert werden, wodurch es auch zu einer Senkung der Investitionskosten kommt. Ein weiterer Vorteil des Verfahrens besteht darin, daß Wasserverluste, die in den Gaswaschanlagen durch in den am Kopf der zweiten Absorptionskolonne und der Entspannungsbehälter sowie des Abstreifers abgezogenen Gasströmen enthaltenes Wasser entstehen, durch Zuführung einer dem Wasserverlust entsprechenden Menge Wasserdampf am Sumpf der vorletzten Entspannungsstufe ausgeglichen werden können. Durch diese Arbeitsweise kann neben der Regelung des Wasserhaushaltes der Gaswaschanlage gleichzeitig der Wärmehaushalt der Gaswaschanlage geregelt werden, so daß ein für die Regelung des Wärmehaushaltes in der Gaswaschanlage vorhandener Wärmetauscher kleiner ausgeführt werden oder gegebenenfalls ganz wegfallen kann.

Als nach dem erfindungsgemäßen Verfahren zu behandelnde Gase kommen beispielsweise Kohlevergasungsgase, Koksofengase, Erdgase und Synthesegase in Betracht.

Die Gase weisen im allgemeinen einen $CO_2$-Gehalt von 1 bis 90 Mol.%, vorzugsweise 2 bis 90 Mol.%, inbesondere 5 bis 60 Mol.% auf. Neben dem $CO_2$ können die Gase als weiteres Sauergas $H_2S$ enthalten oder sie können $H_2S$ allein enthalten, z.B. in Mengen von wenigen Mol.-ppm, beispielsweise 1 Mol.-ppm bis 50 Mol.%, vorzugsweise 10 Mol.-ppm bis 40 Mol.%.

Als Lösungsmittel wird für das erfindungsgemäße Verfahren eine wäßrige Absorptionsflüssigkeit verwendet, die 3 bis 60 Gew.%, in der Regel 5 bis 60 Gew.%, im allgemeinen 10 bis 60 Gew.%, zweckmäßig 20 bis 50 Gew.%, vorzugsweise 25 bis 45 Gew.%, insbesondere 25 bis 35 Gew.% eines tertiären Alkanolamins und 1 bis 50 Gew.%, zweckmäßig 5 bis 40 Gew.%, vorzugsweise 10 bis 30 Gew.%, insbesondere 15 bis 20 Gew.% eines primären Alkanolamins enthält. Geeignete tertiäre Alkanolamine sind beispielsweise Triisopropanolamin, Methyldiisopropanolamin, Dimethylisopropanolamin, Diethylethanolamin, vorzugsweise Triethanolamin, insbesondere Methyldiethanolamin. Als primäre Alkanolamine kommen z.B. 2,2'-Aminoethoxyethanol und vorzugsweise Monoethanolamin in Betracht.

Die das tertiäre Alkanolamin und primäre Alkanolamin enthaltende wäßrige Absorptionsflüssigkeit kann zusätzlich noch ein physikalisches Lösungsmittel enthalten. Geeignete physikalische Lösungsmittel sind beispielsweise N-Methylpyrrolidon, Tetramethylensulfon, Methanol, Oligoethylenglykoldialkylether wie Oligoethylenglykolmethylisopropylether (SEPASOLV MPE), Oligoethylenglykoldimethylether (SELEXOL). Das physikalische Lösungsmittel ist in der Absorptionsflüssigkeit im allgemeinen in Mengen von 1 bis 60 Gew.%, vorzugsweise 10 bis 50 Gew.%, insbesondere 20 bis 40 Gew.%, enthalten.

Das erfindungsgemäße Verfahren wird in der Weise durchgeführt, daß das $CO_2$ und/oder $H_2S$ enthaltende Gas zunächst in der ersten Absorptionsstufe mit der erfindungsgemäß zu verwendenden Absorptionsflüssigkeit behandelt wird. Dabei werden in der ersten Absorptionsstufe im allgemeinen Temperaturen von 40 bis 100°C, vorzugsweise 50 bis 90°C, insbesondere 60 bis 90°C aufrechterhalten. Zweckmäßig wird das zu behandelnde Gas im unteren Teil der ersten Absorptionsstufe, vorzugsweise im unteren Drittel, zugeführt und im Gegenstrom zur Absorptionsflüssigkeit geführt, die zweckmäßig im oberen Teil der ersten Absorptionsstufe, vorzugsweise im oberen Drittel, zugegeben wird. Das am Kopf der ersten Absorptionsstufe erhaltene Gas wird einer zweiten Absorptionszone zugeführt, in der es zur weiteren Entfernung von $CO_2$ und/oder $H_2S$ bei Temperaturen von 30 bis 90°C, vorzugsweise 40 bis 80°C, insbesondere 40 bis 60°C, mit der erfindungsgemäß zu verwendenden Absorptionsflüssigkeit behandelt wird, die einen geringeren Gehalt an $CO_2$ und/oder $H_2S$ aufweist als die der ersten Absorptionsstufe zugeführte Absorptionsflüssigkeit. Auch bezüglich der zweiten Absorptionsstufe wird das zu behandelnde Gas zweckmäßig im unteren Teil, vorzugsweise im unteren Drittel, der zweiten Absorptionszone zugeführt und im Gegenstrom zur Absorptionsflüssigkeit geführt, die zweckmäßig im oberen Teil, vorzugsweise im oberen Drittel, der zweiten Absorptionszone zugegeben wird. Das Produktgas wird am Kopf der zweiten Absorptionszone abgezogen. Die am Boden der zweiten Absorptionsstufe erhaltene mit $CO_2$ und/oder $H_2S$ vorbeladene wäßrige Absorptionsflüssigkeit wird am Kopf der ersten Absorptionsstufe zugeführt. In der ersten und zweiten Absorptionsstufe werden im allgemeinen Drucke von 5 bis 110 bar, vorzugsweise 10 bis 100 bar, insbesondere 20 bis 90 bar angewendet. Dabei können in der ersten und zweiten Stufe unterschiedliche Drucke verwendet werden. Im allgemeinen wird man jedoch in der ersten und zweiten Absorptionsstufe bei gleichem Druck bzw. bei im wesentlichen gleichem Druck arbeiten, wobei die Druckunterschiede z.B. durch den sich in den Absorptionsstufen einstellenden Druckverlust bewirkt werden. Als Absorptionsstufen werden zweckmäßig Absorptionskolonnen verwendet, im allgemeinen Füllkörperkolonnen oder mit Böden ausgestattete Kolonnen. Die mit den Sauergasen $CO_2$ und/oder $H_2S$ beladene Absorptionsflüssigkeit wird im unteren Teil der ersten Absorptionszone, vorzugsweise im unteren Drittel, insbesondere am Sumpf der ersten Absorptionszone abgezogen.

Anschließend wird die aus der ersten Absorptionsstufe erhaltene beladene Absorptionsflüssigkeit zur Regenerierung in mindestens 2, zweckmäßig 2 bis 5, vorzugsweise 2 oder 3 Entspannungsstufen entspannt. Dabei wird in einer Ausführungsform des Verfahrens in der letzten Entspannungsstufe zweckmäßig auf einen Druck von etwa 1 bis 3 bar, vorzugsweise 1 bis 1,8 bar, insbesondere 1 bis 1,5 bar, entspannt. Es kann auch zweckmäßig sein, die letzte Entspannungsstufe unter vermindertem Druck gegenüber Atmosphärendruck, z.B. bei Drucken von 0,5 bis etwa 1 bar, vorzugsweise von 0,7 bis etwa 1 bar, zu betreiben. In einer bevorzugten Ausführungsform des Verfahrens wird die letzte Entspannungsstufe bei vermindertem Druck gegenüber Atmosphärendruck betrieben wird und gegebenenfalls gleichzeitig zum Ausgleich der Wasserverluste des Systems durch in den am Kopf der zweiten Absorptionsstufe und der Entspannungsstufen sowie der Abstreifzone abgezogenen Gasströmen enthaltenes Wasser am Sumpf der vorletzten Entspannungsstufe eine dem Wasserverlust entsprechende Menge Wasserdampf zugeführt. Vorzugsweise wird dabei in der letzten Entspannungsstufe ein Druck von 0,5 bis etwa 1 bar, vorzugsweise 0,7 bis etwa 1 bar aufrechterhalten. Als Apparate zur Erzeugung des verminderten Drucks in der letzten Entspannungsstufe kommen zur Vakuumerzeugung üblicherweise verwendete Apparate, beispielsweise mechanische Vakuumerzeugungsapparate wie Vakuumpumpen oder Verdichter, z.B. Schraubenverdichter, Zentrifugalverdichter, oder Wasserdampfstrahler in Betracht, wobei die Verwendung von mechanischen Vakuumerzeugungsapparaten vorteilhaft sein kann.

Zum Ausgleich der Wasserverluste, die bei dem Verfahren durch in den am Kopf der zweiten Absorptionsstufe und der Entspannungsstufen sowie der Abstreifzone abgezogenen Gasströmen enthaltenes Wasser entstehen, wird zweckmäßig am Sumpf der vorletzten Entspannungsstufe eine dem Wasserverlust entsprechende Menge Wasserdampf zugeführt. In der Regel wird das in den abgezogenen Gasströmen enthaltene Wasser im wesentlichen als Wasserdampf abgezogen. Dem Sumpf der vorletzten Entspannungsstufe kann Niederdruck-, Mitteldruck- oder Hochdruckdampf, d.h. z.B. 1,5- bis 100-bar Dampf zugeführt werden. Vorzugsweise verwendet man Dampf im niederen Druckbereich, z.B. 1,5- bis 10-bar-Dampf, vorteilhaft 1,5- bis 5-bar-Dampf, da dieser Niederdruckdampf im allgemeinen wohlfeil zur Verfügung steht.

Das am Kopf der letzten Entspannungsstufe abgezogene Gas kann an die Atmosphäre abgegeben werden oder mit dem aus der vorletzten Entspannungsstufe abgezogenen Gasstrom vermischt und einer weiteren Behandlung zugeführt werden. In einer vorteilhaften Ausführungsform des Verfahrens, bei dem die letzte Entspannungsstufe bei vermindertem Druck gegenüber Atmosphärendruck betrieben wird, wird der verminderte Druck in der letzten Entspannungsstufe mittels eines Wasserdampfstrahlers erzeugt und dabei zweckmäßig das am Kopf der letzten Entspannungsstufe abgezogene Gas zusammen mit dem Wasserdampf, mit dem der Wasserdampfstrahler betrieben wird, am Sumpf der vorletzten Entspannungsstufe zugeführt.

Falls der Wasserdampf aus dem Wasserdampfstrahler am Sumpf der vorletzten Entspannungsstufe zugeführt wird, wird der Wasserdampfstrahler zweckmäßig mit einer solchen Menge Wasserdampf betrieben, wie sie zum Ausgleich der Wasserverluste des Verfahrens erforderlich ist. Es ist jedoch auch möglich, den Wasserdampfstrahler mit einer geringeren als zum Ausgleich der Wasserverluste entsprechenden Wasserdampfmenge zu betreiben und am Sumpf der vorletzten Entspannungsstufe zusätzlich die zum Ausgleich der Wasserverluste noch fehlende Wasserdampfmenge zuzuführen. Zum Betrieb des Wasserdampfstrahlers kann Mitteldruck- oder Hochdruckdampf verwendet werden. Vorzugsweise verwendet man Dampf im mittleren Druckbereich, z.B. 5- bis 20-bar-Dampf, vorzugsweise 5- bis 10-bar-Dampf.

Die vorletzte Entspannungsstufe wird zweckmäßig bei einem Druck von etwa 1 bis 5 bar, vorzugsweise 1 bis 2,5 bar, insbesondere 1 bis 1,5 bar betrieben.

Für die Entspannung werden zweckmäßig Entspannungsbehälter, die z.B. auch als Kolonnen gestaltet sein können, verwendet. Diese Entspannungsbehälter können frei von besonderen Einbauten sein. Es können jedoch auch mit Einbauten, z.B. mit Füllkörpern, ausgestattete Kolonnen verwendet werden.

Am Kopf der letzten Entspannungsstufe wird ein im wesentlichen die Sauergase $CO_2$ und/oder $H_2S$ enthaltender Gasstrom erhalten, der zweckmäßig entweder mit dem am Kopf der vorletzten Entspannungsstufe abgezogenen Gas vereinigt wird oder zusammen mit dem Wasserdampf für den Betrieb des Wasserdampfstrahlers am Sumpf der vorletzten Entspannungsstufe zugeführt wird.

Ein Strom der am Sumpf der letzten Entspannungsstufe erhaltenen Absorptionsflüssigkeit, die in den Entspannungsstufen bereits zu einem großen Teil, zweckmäßig zu mehr als 50 %, vorzugsweise zu mehr als 60 %, von den Sauergasen $CO_2$ und/oder $H_2S$ befreit worden ist, wird anschließend als Waschflüssigkeit in die erste Absorptionsstufe zurückgeführt und dort zweckmäßig am Kopf der Absorptionsstufe zugegeben. Ein weiterer am Sumpf der letzten und/oder vorletzten Entspannungsstufe erhaltener Strom der Absorptionsflüssigkeit wird zur weiteren Regenerierung einer Abstreifzone zugeführt, in der die noch in diesem Strom enthaltenen Sauergase $CO_2$ und/oder $H_2S$ weitgehend ausgestreift werden. In einer bevorzugten Ausführungsform der vorstehend beschriebenen Arbeitsweise wird die am Sumpf der letzten Entspannungsstufe erhaltene Absorptionsflüssigkeit vollständig in die erste Absorptionsstufe zurückgeführt, und es wird ein Teilstrom der am Sumpf der vorletzten Entspannungsstufe erhaltenen Absorptionsflüssigkeit zur weiteren Regenerierung der Abstreifzone zugeführt. In einer weiteren bevorzugten Ausführungsform wird die am Sumpf der letzten Entspannungsstufe erhaltene Absorptionsflüssigkeit teilweise als Waschflüssigkeit in die erste Absorptionsstufe zurückgeführt, und es wird ein weiterer Teilstrom der am Sumpf der letzten Entspannungsstufe erhaltenen Absorptionsflüssigkeit zur weiteren Regenerierung der Abstreifzone zugeführt. Es ist jedoch auch möglich, einen Teilstrom der am Sumpf der letzten Entspannungsstufe erhaltenen Absorptionsflüssigkeit als Waschflüssigkeit in die erste Absorptionsstufe zurückzuführen und einen weiteren Teil-

0173908

strom der am Sumpf der letzten Entspannungsstufe erhaltenen Absorptionsflüssigkeit und einen Teilstrom der am Sumpf der vorletzten Entspannungsstufe erhaltenen Absorptionsflüssigkeit zur weiteren Regenerierung der Abstreifzone zuzuführen. Der zur ersten Absorptionsstufe zurückgeführte Strom und der der Abstreifzone zugeführte Strom verhalten sich im allgemeinen mengenmäßig zueinander wie 10 : 1 bis 1 : 2, vorzugsweise 5 : 1 bis 1 : 1. Der am Kopf der Abstreifzone erhaltene, im wesentlichen $CO_2$ und/oder $H_2S$ neben Wasserdampf enthaltende Gasstrom kann aus dem System abgezogen werden. Es kann jedoch auch vorteilhaft sein, diesen $CO_2$ und/oder $H_2S$ neben Wasserdampf enthaltenden Gasstrom zur Verringerung der Wasserverluste des Systems in den unteren Teil, vorzugsweise in die untere Hälfte, insbesondere in das untere Drittel der vorletzten Entspannungsstufe zurückzuführen. Als Abstreifzone wird zweckmäßig eine Abstreifkolonne verwendet, im allgemeinen eine Füllkörperkolonne oder eine mit Böden ausgestattete Kolonne.

Die am Sumpf der Abstreifzone erhaltene regenerierte Absorptionsflüssigkeit wird in die zweite Absorptionsstufe zurückgeführt und dort zweckmäßig am Kopf dieser Absorptionsstufe zugegeben.

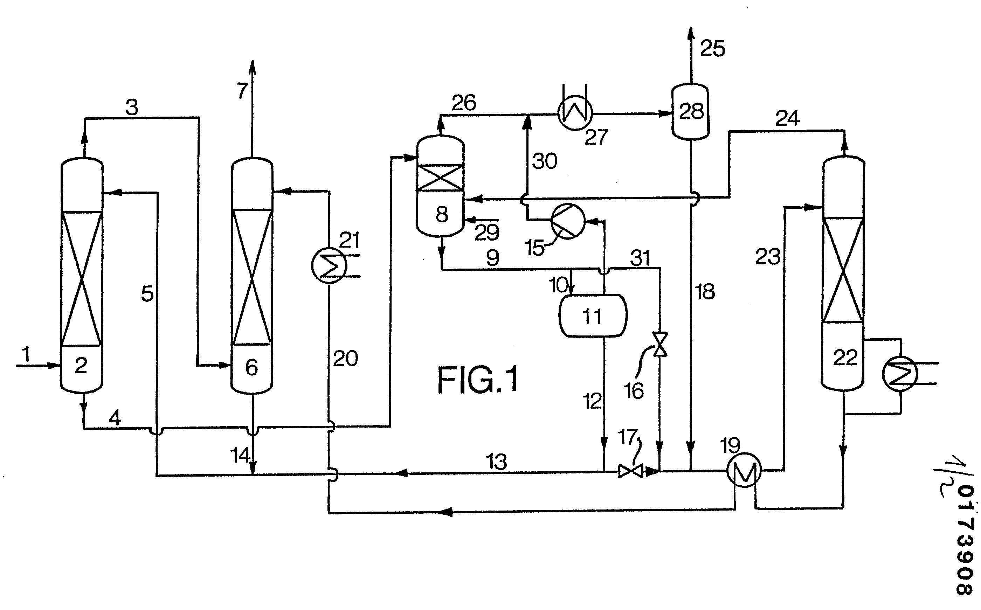

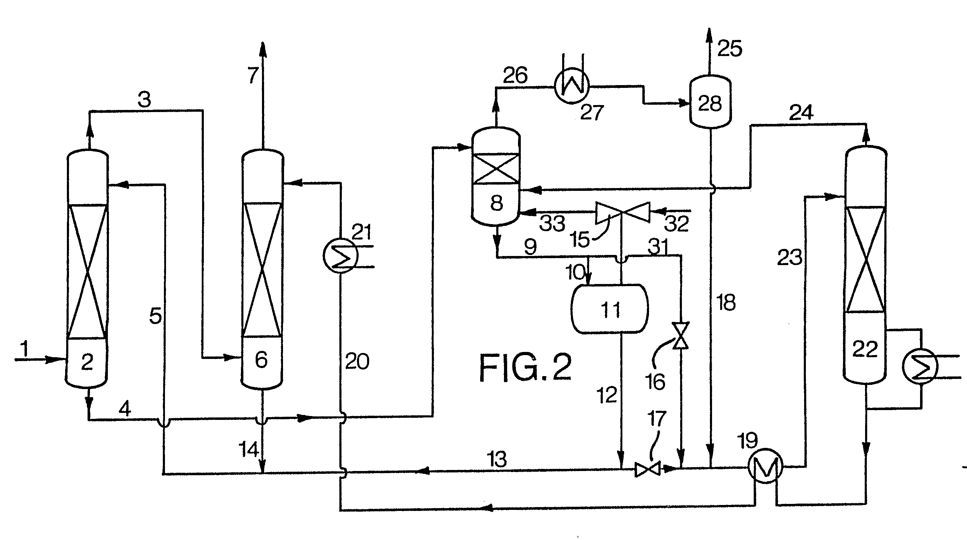

Nachfolgend werden weitere Einzelheiten der Erfindung anhand von zwei Ausführungsbeispielen, deren Verfahrensablauf in den Figuren 1 und 2 schematisch dargestellt ist, erläutert.

Gemäß Figur 1 wird ein $CO_2$ und/oder $H_2S$ enthaltendes Gas, z.B. ein $CO_2$ als Sauergas enthaltendes Synthesegas, über Leitung 1 unter Druck in den Sumpf der ersten Absorptionskolonne 2 gegeben. Gleichzeitig wird über Leitung 5 eine wäßrige Absorptionsflüssigkeit mit einem Gehalt von 3 bis 60 Gew.% Methyldiethanolamin und 1 bis 50 Gew.% Monoethanolamin auf den Kopf der ersten Absorptionskolonne gegeben. Das am Kopf der ersten Absorptionskolonne erhaltene vorgewaschene Gas wird zur Feinreinigung über Leitung 3 in den Sumpf der zweiten Absorptionskolonne 6 gegeben. Gleichzeitig wird über Leitung 20 eine wäßrige Absorptionsflüssigkeit mit einem Gehalt von 3 bis 60 Gew.% Methyldiethanolaminlösung und 1 bis 50 Gew.% Monoethanolamin, die aus der Abstreifkolonne 22 erhalten wird und praktisch frei von Sauergasen ist, auf den Kopf der zweiten Absorptionskolonne gegeben. Das gewaschene Gas wird über Leitung 7 am Kopf der zweiten Absorptionskolonne 6 abgezogen. Die am Sumpf der zweiten Absorptionskolonne erhaltene mit den Sauergasen vorbeladene wäßrige Absorptionsflüssigkeit wird über Leitungen 14 und 5 nach Vereinigung mit der über Leitungen 12 und 13 aus der letzten Entspannungsstufe 11 erhaltenen Absorptionsflüssigkeit auf den Kopf der ersten Absorptionskolonne 2 gegeben. Die am Sumpf der ersten Absorptionskolonne 2 erhaltene, mit $CO_2$ und/oder $H_2S$

0173908

beladene wäßrige Absorptionsflüssigkeit wird zur Regenerierung über Leitung 4 in einem ersten Entspannungsverdampfungsbehälter 8 entspannt, z.B. über ein Ventil oder vorzugsweise über eine Entspannungsturbine. Hierbei wird ein Zwischenentspannungsgas aus der Absorptionsflüssigkeit freigesetzt, das über Leitung 26 abgezogen wird und mit dem über Leitung 30 aus der letzten Entspannungsstufe 11 abgezogenen Gas vereinigt wird. Nach Passieren des Wärmetauschers 27 und des Abscheidegefäßes 28 werden die vereinigten Gasströme über Leitung 25 abgezogen. Im Abscheidegefäß 28 abgeschiedene Flüssigkeit wird über Leitung 18 abgezogen. In den Sumpf des Enspannungsbehälters 8 wird gegebenenfalls zum Ausgleich der Wasserverluste des Systems über Leitung 29 Wasserdampf, z.B. 2,5 bar Niederdruckdampf, eingeleitet. Am Boden des Entspannungsbehälters 8 wird die teilentspannte Absorptionsflüssigkeit über Leitung 9 abgezogen und in einer ersten Variante des Verfahrens bei geschlossenem Ventil 16 und geöffnetem Ventil 17 ganz über Leitung 10 in einen zweiten Entspannungsbehälter 11 entspannt, der beispielsweise oberhalb Atmosphärendruck betrieben wird oder in dem z.B. mittels der Vakuumpumpe 15 ein Druck von z.B. 0,5 bar bis weniger als Atmosphärendruck aufrechterhalten wird. Hierbei wird ein sauergasreiches Entspannungsgas freigesetzt, das über Leitung 30 am Kopf des Entspannungsbehälters 11 abgezogen wird und mit dem aus dem ersten Entspannungsbehälter 8 über Leitung 26 abgezogenen Gas vereinigt wird. Die am Sumpf des Entspannungsbehälters 11 über Leitung 12 abgezogene entspannte Absorptionsflüssigkeit wird teilweise über Leitungen 13 und 5 zum Kopf der Absorptionskolonne 2 zurückgeführt und zum anderen Teil über Leitung 23 auf den Kopf der Abstreifkolonne 22 gegeben.

In einer zweiten Variante des Verfahrens wird bei geschlossenem Ventil 17 und geöffnetem Ventil 16 die über Leitung 9 abgezogene teilentspannte Absorptionsflüssigkeit zu einem Teil über Leitung 10 in den zweiten Entspannungsbehälter 11 entspannt und zum anderen Teil über Leitungen 31 und 23 auf den Kopf der Abstreifkolonne 22 gegeben. Die am Sumpf des Entspannungsbehälters 11 über Leitung 12 abgezogene entspannte Absorptionsflüssigkeit wird bei der zweiten Variante ganz über Leitungen 13 und 5 zum Kopf der Absorptionskolonne 2 zurückgeführt.

Die am Sumpf der Abstreifkolonne 22 erhaltene regenerierte Absorptionsflüssigkeit wird über Leitung 20 nach Passieren der Wärmetauscher 19 und 21 auf den Kopf der zweiten Absorptionskolonne 6 zurückgeführt. Der am Kopf der Abstreifkolonne 22 erhaltene $CO_2$ und/oder $H_2S$ enthaltende Abgasstrom wird über Leitung 24 zweckmäßig dem unteren Teil des Entspannungsbehälters 8 zugeführt. Es ist jedoch auch möglich, den am Kopf der Abstreifkolonne 22 erhaltenen Abgasstrom unmittelbar aus dem System abzuziehen, ohne ihn noch vorher dem Entspannungsbehälter 8 zuzuführen.

In einem weiteren beispielhaften Ausführunsbeispiel (vgl. Fig. 2) wird wie im ersten Ausführungsbeispiel verfahren, wobei jedoch anstelle einer Vakuumpumpe der Dampfstrahler 15 zur Erzeugung des verminderten Drucks im zweiten Entspannungsbehälter 11 verwendet wird, dem über Leitung 32 z.B. eine solche Menge Wasserdampf zugeführt wird, wie sie zum Ausgleich der Wasserverluste des Systems erforderlich ist. Das am Kopf des Entspannungsbehälters 11 abgezogene Gas wird zusammen mit dem Wasserdampf, mit dem der Wasserdampfstrahler 15 betrieben wird, über Leitung 33 am Sumpf des ersten Entspannungsbehälters 8 zugeführt.

Das folgende Beispiel veranschaulicht die Erfindung.

Beispiel

Man verwendet eine Gaswaschanlage entsprechend der Fig. 2 mit zwei hintereinandergeschalteten Absorptionskolonnen, zwei hintereinandergeschalteten Entspannungsbehältern und einer Abstreifkolonne. In den Absorptionskolonnen werden 9800 kmol/h eines $CO_2$-haltigen Synthesegases mit einer wäßrigen Absorptionsflüssigkeit mit einem Gehalt von 35 Gew.% Methyldiethanolamin und 15 Gew.% Monoethanolamin gewaschen. Das zu reinigende Sysnthesegas wird mit einem Druck von 28 bar am Sumpf der ersten Absorptionskolonne zugeführt. Das zu reinigende, aus einem Steam Reformer stammende Gas hat die folgende Zusammensetzung:

| | |
|---|---|
| $CO_2$ | 16,9 Vol.% |
| CO | 0,43 Vol.% |
| $H_2$ | 54,6 Vol.% |
| $N_2$ | 26,5 Vol.% |
| $CH_4$ | 1,15 Vol.% |
| Ar | 0,42 Vol.% |

Die Temperatur der Absorptionsflüssigkeit im Zulauf zur ersten Absorptionskolonne beträgt 75°C. Die Temperatur der der zweiten Absorptionskolonne zugeführten Absorptionsflüssigkeit beträgt 40°C. Das am Kopf der zweiten Absorptionskolonne abgezogene gereinigte Synthesegas hat die folgende Zusammensetzung:

| | |
|---|---|
| $CO_2$ | 0,08 Vol.% |
| CO | 0,52 Vol.% |
| $H_2$ | 65,60 Vol.% |
| $N_2$ | 31,91 Vol.% |
| $CH_2$ | 1,38 Vol.% |
| Ar | 0,51 Vol.% |

**0173908**

Die die erste Absorptionskolonne am Sumpf verlassende beladene Absorptionsflüssigkeit wird im ersten Entspannungsbehälter auf einen Druck von 1,2 bar entspannt. Am Kopf des ersten Entspannungsbehälters werden 1712 kmol/h eines Entspannungsgases abgezogen. Die am Boden des zweiten Entspannungsbehälters abgezogene Absorptionsflüssigkeit wird anschließend in den zweiten Entspannungsbehälter entspannt. Die am Boden des zweiten Entspannungsbehälters erhaltene entspannte Absorptionsflüssigkeit wird zu etwa 90 % in die erste Absorptionskolonne zurückgeführt. Der restliche Teil wird in der Abstreifkolonne regeneriert und danach in die zweite Absorptionskolonne zurückgeführt.

0173908

## Patentansprüche

1. Verfahren zum Entfernen von $CO_2$ und/oder $H_2S$ aus $CO_2$ und/oder $H_2S$ enthaltenden Gasen mittels einer wäßrigen, ein Alkanolamin enthaltenden Absorptionsflüssigkeit, dadurch gekennzeichnet, daß man das $CO_2$ und/oder $H_2S$ enthaltende Gas in einer ersten Absorptionsstufe mit einer 3 bis 60 Gew.% eines tertiären Alkanolamins und 1 bis 50 Gew.% eines primären Alkanolamins enthaltenden wäßrigen Absorptionsflüssigkeit behandelt, das am Kopf der ersten Absorptionsstufe erhaltene Gas einer zweiten Absorptionsstufe zuführt, in der es zur weiteren Entfernung von $CO_2$ und/oder $H_2S$ mit einer 3 bis 60 Gew.% eines tertiären Alkanolamins und 1 bis 50 Gew.% eines primären Alkanolamins enthaltenden wäßrigen Absorptionsflüssigkeit behandelt wird, die einen geringeren Gehalt an $CO_2$ und/oder $H_2S$ aufweist als die der ersten Absorptionsstufe zugeführte Absorptionsflüssigkeit, am Kopf der zweiten Absorptionsstufe das behandelte Gas abzieht, die am Boden der zweiten Absorptionsstufe erhaltene mit $CO_2$ und/oder $H_2S$ vorbeladene wäßrige Absorptionsflüssigkeit am Kopf der ersten Absorptionsstufe zuführt, die im unteren Teil der ersten Absorptionsstufe erhaltene, mit $CO_2$ und/oder $H_2S$ beladene wäßrige Absorptionsflüssigkeit zur Regenerierung in mindestens zwei Entspannungsstufen entspannt, einen am Sumpf der letzten Entspannungsstufe erhaltenen Strom der Absorptionsflüssigkeit in die erste Absorptionsstufe zurückführt, einen weiteren am Sumpf der letzten und/oder vorletzten Entspannungsstufe erhaltenen Strom der Absorptionsflüssigkeit zur weiteren Regenerierung einer Abstreifzone zuführt und die am Sumpf der Abstreifzone erhaltene regenerierte Absorptionsflüssigkeit in die zweite Absorptionsstufe zurückführt.

2. Verfahren nach Anspruch 1, dadurch gekennzeichnet, daß man die letzte Entspannungsstufe bei vermindertem Druck gegenüber Atmosphärendruck betreibt.

3. Verfahren nach Anspruch 1 und 2, dadurch gekennzeichnet, daß man zum Ausgleich der Wasserverluste durch in den am Kopf der zweiten Absorptionsstufe und/oder aus den Entspannungsstufen und/oder aus der Abstreifzone abgezogenen Gasströmen enthaltenes Wasser am Sumpf der vorletzten Entspannungsstufe eine dem Wasserverlust entsprechende Menge Wasserdampf zuführt.

**0173908**

4.  Verfahren nach Anspruch 2 und 3, <u>dadurch gekennzeichnet</u>, daß der verminderte Druck in der letzten Entspannungsstufe mittels eines Wasserdampfstrahlers erzeugt wird.

5.  Verfahren nach Anspruch 4, <u>dadurch gekennzeichnet</u>, daß das am Kopf der letzten Entspannungsstufe abgezogene Gas zusammen mit dem Wasserdampf, mit dem der Wasserdampfstrahler betrieben wird, am Sumpf der vorletzten Entspannungsstufe zugeführt wird.

Zeichn.

FIG.1

FIG.2